Europäisches Patentamt

European Patent Office

Office européen des brevets

(19)

(11) EP 0 639 009 B1

(12) FASCICULE DE BREVET EUROPEEN

(45) Date de publication et mention
de la délivrance du brevet:
08.01.1997 Bulletin 1997/02

(51) Int Cl.⁶: H04B 1/66, H04B 7/26

(21) Numéro de dépôt: 94401820.9

(22) Date de dépôt: 05.08.1994

(54) **Procédé de transmission pour des radio communications AMRC et dispositifs pour sa mise en oeuvre**

Verfahren und Anordnung zur Übertragung mittels CDMA-Funkkommunikation

Method and device for transmission in CDMA radio communications

(84) Etats contractants désignés:
CH DE ES GB IT LI NL SE

(30) Priorité: 13.08.1993 FR 9309960

(43) Date de publication de la demande:
15.02.1995 Bulletin 1995/07

(73) Titulaire: MATRA COMMUNICATION
F-29562 Quimper Cédex 9 (FR)

(72) Inventeurs:
• Lucas, Philippe
F-91120 Palaiseau (FR)
• Mege, Philippe
F-92340 Bourg La Reine (FR)

(74) Mandataire: Loisel, Bertrand et al
Cabinet Plasseraud,
84, rue d'Amsterdam
75440 Paris Cédex 09 (FR)

(56) Documents cités:
DE-A- 4 010 274        US-A- 4 888 788
US-A- 4 962 507

## Description

La présente invention concerne le domaine des communications radiotéléphoniques à accès multiple à répartition par codes (AMRC ou, en anglais, CDMA pour "Code Division Multiple Access").

L'AMRC est un mode de communication numérique à spectre étalé dans lequel on crée différents canaux de transmission en utilisant, pour chaque canal, des séquences d'étalement modulant les bits d'information à transmettre. Les séquences d'étalement ont une cadence supérieure à celle des bits d'information pour réaliser l'étalement du spectre du signal radio. Leurs propriétés d'auto- et d'inter-corrélation sont adaptées pour permettre le multiplexage des différents canaux: ce sont en général des séquences pseudo-aléatoires, orthogonales ou quasi-orthogonales entre elles, prenant les valeurs -1 ou +1.

L'utilisation de l'AMRC dans le domaine de la radiotéléphonie cellulaire est décrite dans le chapitre I de l'ouvrage "Mobile radio communications" de Raymond Steele, Pentech Press, Londres, 1992, ainsi que dans l'article "On the system design aspects of code division multiple access (CDMA) applied to digital cellular and personal communications networks", de A. Salmasi et K.S. Gilhousen, Proc. of the 41st IEEE Vehicular Technology Conference, St Louis, MO, 19-22 mai 1991, et dans le brevet US 5 103 459. Les canaux de transmission multiplexés sont formés au niveau de la station de base de chaque cellule du réseau. Chaque station mobile située dans la cellule utilise une séquence d'étalement particulière pour retrouver, dans le signal radio global émis par la station de base, les bits d'information qui lui sont destinés.

Dans le système décrit dans les publications ci-dessus, les séquences d'étalement sont complexes, c'est-à-dire qu'elles se composent chacune de deux séquences pseudo-aléatoires réelles formant respectivement la partie réelle de la séquence d'étalement qui module les bits à transmettre pour former une composante en phase, et la partie imaginaire de la séquence d'étalement, qui module les mêmes bits pour former une composante en quadrature.

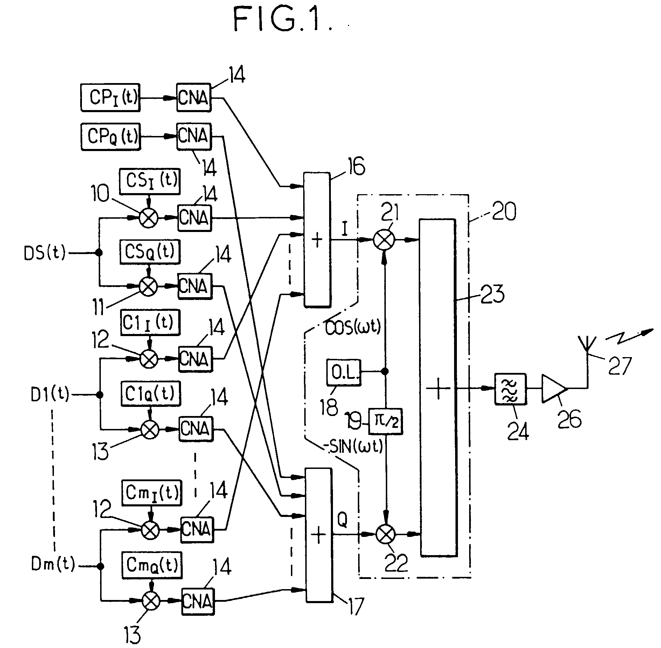

Ce principe de modulation est illustré par le schéma de la figure 1 qui montre l'étage de modulation d'une station de base classique. Sur ce schéma, on a représenté m canaux de communication vocale sur lesquels sont transmis des bits d'information vocale $D1(t),..., Dm(t)$ préalablement codés par des techniques classiques (codage par blocs, entrelacement...), un canal de service sur lequel sont transmis des données $DS(t)$ servant à la gestion des communications, et un canal pilote sur lequel aucun bit d'information n'est transmis.

Sur le canal pilote est transmise une séquence pilote complexe $CP= (CP_I, CP_Q)$ servant à la synchronisation des stations mobiles et à l'estimation des trajets de propagation. Sur le canal de service, deux multiplieurs 10, 11 sont utilisés pour moduler les données $DS(t)$ par la séquence d'étalement complexe $CS= (CS_I, CS_Q)$. Sur chaque canal de communication vocale, deux multiplieurs 12, 13 sont utilisés pour moduler les bits $D1(t), ..., Dm(t)$. Après conversion numérique-analogique 14, les composantes en phase relatives aux différents canaux AMRC sont sommées (sommateur 16), ainsi que les composantes en quadrature (sommateur 17), pour former un signal en phase I et un signal en quadrature Q. L'étage de modulation de porteuse 20 assure une modulation de phase à quatre états (MDP-4, ou en anglais, QPSK pour "Quadrature Phase Shift Keying"): deux ondes radio en quadrature sont fournies par un oscillateur local 18 et un déphaseur de $\pi/2$ 19, puis modulées par les signaux en phase I et en quadrature Q au moyen de mélangeurs 21, 22. Après sommation 23 des deux ondes modulées en quadrature, le signal radio est soumis à un filtrage passe-bande 24 et à une amplification 26 avant d'être émis dans la cellule par l'antenne omnidirectionnelle 27.

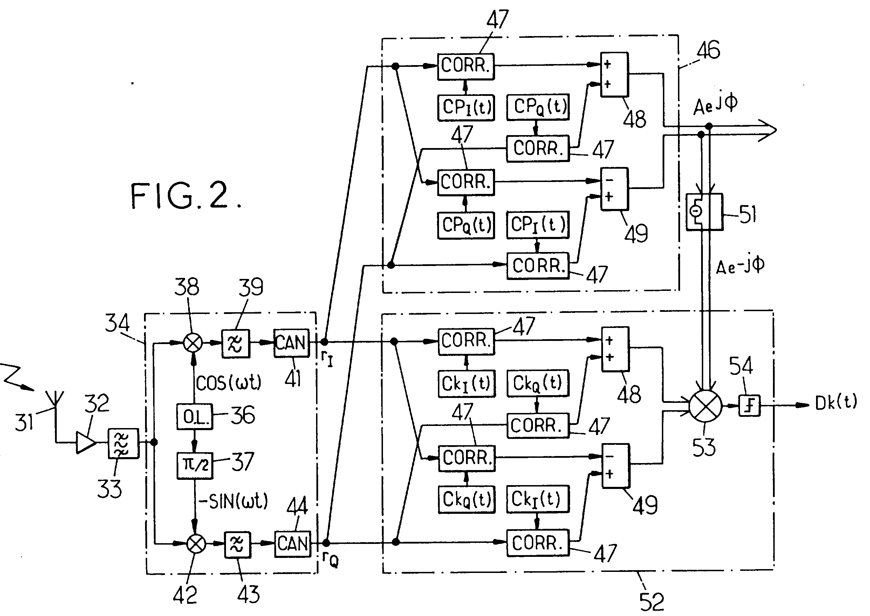

Pour recevoir les bits d'information $Dk(t)$ qui lui sont destinés, une station mobile comprend un récepteur AMRC classique, tel que celui représenté sur le schéma de la figure 2. Le signal radio reçu sur l'antenne 31 subit d'abord une amplification 32 et un filtrage passe-bande 33 avant d'être adressé à l'étage de démodulation de porteuse 34. Celui-ci comprend un oscillateur local 36 et un déphaseur de $\pi/2$ 37 qui délivrent deux ondes radio en quadrature à la fréquence porteuse utilisées pour produire une composante en phase $r_I$ et une composante en quadrature $r_Q$. La première onde radio est mélangée au signal reçu en 38, et le signal résultant passe par le filtre passe-bas 39 avant d'être numérisé par le convertisseur analogique-numérique 41 pour fournir $r_I$. L'onde en quadrature est mélangée au signal reçu en 42, et le signal résultant passe par le filtre passe-bas 43 avant d'être numérisé par le convertisseur 44 pour fournir $r_Q$.

Le récepteur est habituellement un récepteur à diversité lorsqu'on cherche à exploiter plusieurs trajets de propagation simultanés, comme le permet l'AMRC (à ce sujet, voir le brevet US 5 109 390). Ainsi, un récepteur en râteau (rake receiver) comporte plusieurs bras dont chacun assure la réception du signal sur un trajet, les résultats fournis par chaque bras étant ensuite combinés pour améliorer les performances de réception. Chaque trajet est détecté grâce au signal transmis sur le canal pilote. Cette procédure permet également d'assurer une transition en douceur (soft handoff) lorsque la station mobile se déplace d'une cellule à une autre (voir le brevet US 5 101 501).

La figure 2 illustre la configuration classique d'un bras du récepteur en râteau (le traitement appliqué au canal de service n'est pas représenté pour simplifier la figure). Le module 46 de traitement du canal pilote comprend quatre corrélateurs 47 pour calculer les corrélations entre chacune des composantes en phase et en quadrature $r_I$, $r_Q$ et chacune des parties réelle et imaginaire de la séquence pilote $CP= (CP_I, CP_Q)$. La somme de la corrélation entre $r_I$ et $CP_I$ et de la corrélation entre $r_Q$ et $CP_Q$, calculée en 48, constitue la partie réelle d'un signal complexe $Ae^{j\phi}$ qui est une

estimation de la réponse du trajet de propagation en amplitude et en phase. La différence entre la corrélation entre $r_Q$ et $CP_I$ et la corrélation entre $r_I$ et $CP_Q$, calculée en 49, constitue la partie imaginaire de l'estimation $Ae^{j\phi}$. Le complexe conjugué $Ae^{-j\phi}$ de cette estimation, calculé en 51, est adressé au module 52 de traitement du canal de communication vocale. Celui-ci comporte quatre corrélateurs 47, un sommateur 48 et un soustracteur 49 agencés de la même façon que ceux du module 46, les corrélations étant calculées avec la séquence d'étalement complexe du canal $Ck= (Ck_I, Ck_Q)$. Un multiplieur complexe 53 multiplie le signal complexe obtenu en sortie du sommateur 48 et du soustracteur 49 du module 52 par $Ae^{-j\phi}$, de façon à fournir un signal réel représentatif des bits d'information transmis sur le canal. Un comparateur à seuil 54 déduit les bits d'information Dk(t) de ce signal réel.

Pour la liaison montante, des stations mobiles vers la station de base, la pratique habituelle est également d'utiliser des séquences d'étalement complexes et une modulation MDP-4.

L'utilisation de séquences complexes tend à compliquer les équipements des stations de base et des stations mobiles. On a vu notamment que la démodulation du signal reçu implique le calcul de quatre corrélations, qui nécessitent chacune un corrélateur de haute performance, capable d'effectuer les calculs à une cadence au moins égale à celle des échantillons des séquences d'étalement (typiquement de l'ordre de quelques mégahertz). Il serait souhaitable de proposer un mode de modulation et de démodulation permettant de simplifier les équipements nécessaires à sà mise en oeuvre.

En théorie, il est possible d'utiliser des séquences d'étalement réelles et une modulation de phase à deux états (MDP-2 ou, en anglais, BPSK pour "Binary Phase Shift Keying") (voir par exemple l'article "Theory of Spread-Spectrum Communications- A Tutorial" par R.L. Pickholtz et al., IEEE Transactions on Communications, Vol. COM-30, N°5, Mai 1982). Mais cette solution n'est pas optimale en ce qui concerne les interférences entre canaux. L'intercorrélation résiduelle entre les séquences d'étalement (qui n'est pas rigoureusement nulle parce que les séquences pseudo-aléatoires ne sont pas exactement orthogonales) provoque des interférences entre canaux qui se manifestent comme un bruit blanc dans le signal obtenu après corrélation. C'est un avantage de l'utilisation de séquences d'étalement complexes que de diminuer le niveau de ce bruit. On peut comprendre cela en considérant, à titre d'exemple, la transmission idéale, sur un seul trajet non bruité avec $Ae^{j\phi}= 1$, d'un signal radio obtenu en combinant des bits D1,..., Dm sur m canaux AMRC. Le signal complexe reçu par la station mobile après démodulation de porteuse s'écrit alors:

$$r_I + jr_Q = \frac{1}{2}\sum_{i=1}^{m} Di(t) \times (Ci_I(t) + jCi_Q(t))$$

Après traitement du canal k par le module 52 de la figure 2, l'estimation d'un bit Dk s'écrit ($T_b$ désignant la durée d'un bit utilisée comme temps d'intégration dans les corrélateurs 47):

$$est(Dk) = \frac{1}{T_b}\int_{T_b} (r_I + jr_Q) \times (Ck_I - jCk_Q)\, dt$$

$$= \frac{1}{2T_b} \times \int_{T_b} Dk|Ck|^2 dt + \frac{1}{2T_b}\sum_{i \neq k}\int_{T_b} Di \times (Ci_I + jCi_Q) \times (Ck_I - jCk_Q)\, dt$$

$$= Dk + \sum_{i \neq k}\frac{Di}{2T_b}\int_{T_b} (Ci_I Ck_I + Ci_Q Ck_Q)\, dt + j\sum_{i \neq k}\frac{Di}{2T_b}\int_{T_b} (Ci_Q Ck_I - Ci_I Ck_Q)\, dt \quad (1)$$

Les deux derniers termes représentent le bruit provoqué par les interféreurs. Le troisième terme n'est pas gênant car il est purement imaginaire alors que Dk est obtenu sur l'axe réel. Dans le second terme, les contributions des intercorrélations $Ci_I Ck_I$ et $Ci_Q Ck_Q$ s'additionnent de façon non cohérente lorsque les séquences sont complexes avec des parties réelle et imaginaire indépendantes, tandis qu'elles s'additionnent de façon cohérente lorsque les séquences sont réelles ($Ci_I = Ci_Q$ pour tout i). L'utilisation de séquences complexes procure donc un gain de l'ordre de 3dB sur le rapport signal-sur-interféreurs (SIR) par rapport à l'utilisation de séquences réelles.

C'est pourquoi les séquences d'étalement réelles ne sont pas utilisées dans les systèmes AMRC connus, malgré la simplification considérable qu'elles apporteraient.

Un but de la présente invention est de permettre l'utilisation de séquences d'étalement réelles en réduisant les inconvénients ci-dessus liés aux interférences entre canaux.

L'invention propose ainsi un procédé de transmission pour des communications AMRC, dans lequel une station de base établit des canaux AMRC définis chacun par une séquence d'étalement respective modulant des bits d'information à transmettre pour former un signal de canal respectif, et les différents signaux de canaux sont combinés puis modulés sur une fréquence porteuse de manière à produire un signal radio à modulation de phase émis vers des stations mobiles, caractérisé en ce que chaque séquence d'étalement ne comporte qu'une composante réelle, et en ce que, pour produire le signal radio, on applique un déphasage relatif entre différents signaux de canaux.

Grâce à la répartition des phases entre signaux de canaux, on peut réduire l'influence des interférences entre canaux, à titre d'alternative à l'utilisation de séquences d'étalement complexes.

Dans une version particulièrement simple du procédé selon l'invention, les signaux des canaux sont répartis en n groupes, n désignant un nombre entier au moins égal à 2, et les signaux de canaux d'un même groupe sont sommés pour former une composante de modulation qui module une onde radio respective à la fréquence porteuse, les ondes radio relatives aux différents groupes présentant entre elles des déphasages multiples de $\pi/2^{n-1}$.

Une autre possibilité est d'affecter un déphasage propre à chaque signal de canal.

Pour les liaisons montantes, un principe analogue peut être adopté. Le signal radio montant transmis d'une station mobile vers une station de base est alors un signal AMRC dans lequel des bits d'information sont modulés par une séquence d'étalement ayant une seule composante réelle, puis modulés sur une fréquence porteuse par modulation de phase. La répartition des phases entre canaux montants résulte des différences de trajets de propagation entre les stations mobiles et la station de base.

Le procédé de l'invention permet de simplifier considérablement les équipements nécessaires à l'émission et à la réception par rapport à ceux dont on a besoin pour manipuler des séquences complexes. Dans un second aspect, l'invention propose ainsi un modulateur AMRC pour produire un signal radio descendant d'une station de base vers des stations mobiles d'un réseau radiotéléphonique, comprenant des moyens de multiplexage et d'étalement de spectre pour définir des canaux AMRC dans lesquels des signaux de canaux respectifs sont formés en modulant des bits d'information à transmettre par une séquence d'étalement respective, des moyens pour combiner les différents signaux de canaux, et des moyens de modulation de porteuse pour produire un signal radio à modulation de phase à partir des combinaisons des différents signaux de canaux, caractérisé en ce que chaque séquence d'étalement ne comporte qu'une composante réelle, et en ce que les moyens de combinaison sont agencés pour que, dans le signal radio, un déphasage relatif soit appliqué entre différents signaux de canaux.

Et selon un troisième aspect de l'invention, un démodulateur AMRC, permettant de recevoir au niveau d'une station mobile des bits d'information transmis sur au moins un canal AMRC par une station de base comportant un modulateur AMRC du type ci-dessus, comprend des moyens de démodulation de porteuse délivrant une composante en phase et une composante en quadrature à partir du signal radio émis par la station de base, un premier corrélateur calculant une corrélation entre la composante en phase et la séquence d'étalement correspondant au canal AMRC, un second corrélateur calculant une corrélation entre la composante en quadrature et la séquence d'étalement correspondant au canal AMRC, un multiplieur complexe dont une entrée reçoit le nombre complexe ayant respectivement pour parties réelle et imaginaire les sorties des premier et second corrélateurs, et dont l'autre entrée reçoit une estimation prenant en compte le déphasage introduit par un trajet de propagation et le déphasage affecté au canal AMRC, et des moyens de comparaison recevant la partie réelle de la sortie du multiplieur complexe et restituant les bits d'information transmis.

En variante, le démodulateur AMRC peut comprendre un multiplieur complexe dont une entrée reçoit le nombre complexe ayant respectivement pour parties réelle et imaginaire, les composantes en phase et en quadrature et dont l'autre entrée reçoit une estimation prenant en compte le déphasage introduit par un trajet de propagation et le déphasage affecté au canal AMRC, un corrélateur calculant une corrélation entre la partie réelle de la sortie du multiplieur complexe et la séquence d'étalement correspondant au canal AMRC, et des moyens de comparaison recevant la sortie du corrélateur et restituant les bits d'information transmis.

D'autres particularités et avantages de l'invention apparaîtront dans la description ci-après d'exemples de réalisation préférés mais non limitatifs, en référence aux dessins annexés dans lesquels:

- les figures 1 et 2, précédemment discutées, sont des schémas montrant le modulateur d'une station de base d'un réseau radiotéléphonique et le démodulateur d'une station mobile, qui ont la configuration classique des systèmes AMRC;
- les figures 3 et 4 sont deux schémas analogues à celui de la figure 1 montrant deux modes de réalisation d'un modulateur AMRC selon l'invention destiné à la partie émission d'une station de base;
- la figure 5 est un schéma montrant un démodulateur AMRC selon l'invention destiné à la partie réception d'une station mobile;
- la figure 6 est un schéma illustrant partiellement une variante du démodulateur de la figure 5; et
- la figure 7 est un schéma montrant un modulateur destiné à la partie émission d'une station mobile.

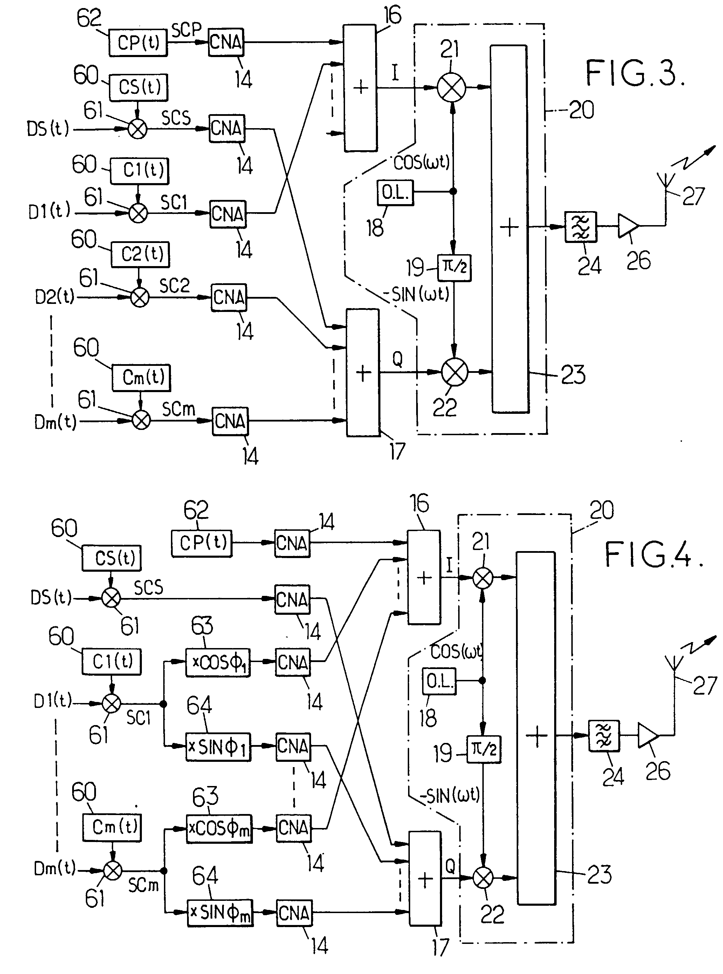

Pour la clarté de l'exposé, on a utilisé sur les figures 3 à 5 des signes de références identiques à ceux des figures 1 et 2 pour désigner des éléments semblables.

Dans un système de radiotéléphonie cellulaire, des stations de base sont réparties sur le territoire à couvrir. Dans la zone, ou cellule, couverte par une station de base, plusieurs stations mobiles peuvent communiquer simultanément avec la station de base.

Chaque station de base, telle que celles illustrées sur les figures 3 et 4, établit des canaux de transmission AMRC définis chacun par une séquence d'étalement respective CP, CS, C1, ..., Cm. Les séquences d'étalement, dont les échantillons ou "chips" prennent des valeurs +1 ou -1 sont périodiques, pseudo-aléatoires et pratiquement décorrélées. Elles ont une cadence supérieure à celle des bits d'information à transmettre, par exemple une cadence de 1MHz. Chacune des séquences C1, ..., Cm correspondant aux canaux de communication vocale est caractéristique de l'utilisateur (station mobile) avec lequel la communication s'effectue sur le canal correspondant. Sur le canal de service et sur chaque canal de communication vocale, les bits d'information à transmettre DS, D1,..., Dm, qui représentent des signaux vocaux ou de données préalablement codés par des techniques classiques, sont multipliés en 61 par la séquence d'étalement CS, C1, ...., Cm produite par un générateur approprié 60 pour former un signal de canal SCS, SC1, ..., SCm dont le spectre est étalé en fréquence relativement à celui des bits d'information transmis sur les canaux AMRC.

Les bits d'information DS représentent des données utiles à l'initialisation et au contrôle des communications avec les stations mobiles.

Sur le canal pilote, aucun bit d'information n'est transmis. Le signal SCP du canal pilote est simplement constitué par la séquence d'étalement CP qui est une séquence pilote de référence produite par un générateur 62.

Les différents signaux de canaux sont combinés entre eux pour former une composante de modulation en phase I et une composante de modulation en quadrature Q. Ces deux composantes sont ensuite soumises à une modulation de phase comme dans le cas de la figure 1 par l'étage de modulation de porteuse 20 qui est analogue à un étage de modulation MDP-4. Le signal résultant est filtré et amplifié puis émis par l'antenne 27.

On peut voir le procédé selon l'invention comme une façon particulière de combiner les signaux de canaux, de manière à ce qu'un déphasage relatif existe entre différents signaux de canaux dans le signal radio, les séquences d'étalement ne comportant qu'une seule composante réelle.

Dans le mode de réalisation de la figure 3, les signaux de canaux sont répartis en deux groupes. Le premier groupe comporte le signal du canal pilote SCP et les signaux des canaux de communication impairs (SCi avec i impair). Le second groupe comporte le signal du canal de service SCS et les signaux des canaux de communication pairs (SCi avec i pair). Les signaux du premier groupe sont adressés, après conversion numérique-analogique 14, à l'entrée du sommateur 16 qui délivre la composante de modulation en phase I. Les signaux du second groupe sont adressés, après conversion numérique-analogique 14, à l'entrée du sommateur 17 qui délivre la composante de modulation en quadrature Q. Il existe ainsi un déphasage relatif de $\pi/2$ entre les signaux de canaux du premier et du second groupe.

Il est possible d'utiliser d'autres modes de répartition des signaux de canaux entre les deux groupes. On pourra notamment faire appel à des protocoles permettant, selon le trafic, d'équilibrer les puissances transmises dans les deux groupes. Comme il sera expliqué plus loin, il convient toutefois d'imposer un déphasage fixe prédéterminé entre le signal du canal pilote et celui d'un canal de service.

Le modulateur de la figure 3 est aisément généralisable au cas où l'étage 20 est semblable à un étage de modulation de phase à $2^n$ états, n désignant un entier.

Dans ce cas, il faut disposer de n composantes de modulation qui servent à moduler des ondes radio respectives ayant entre elles des déphasages multiples de $\pi/2^{n-1}$. On répartit alors les signaux de canaux en n groupes, et on somme les signaux de chaque groupe pour former les n composantes de modulation. Le schéma de la figure 3 correspond au cas particulier n=2.

Dans le mode de réalisation de la figure 4, un déphasage propre $\phi_i$ est affecté à chaque signal de canal. Chaque signal de canal SCi (i=P, S, 1, ..., m) est multiplié d'une part par $\cos\phi_i$ et d'autre part par $\sin\phi_i$, comme l'indiquent symboliquement les blocs 63 et 64 sur la figure 4. Après conversion numérique-analogique 14, le produit SCi$\times\cos\phi_i$ est adressé à l'entrée du sommateur 16, et le produit SCi$\times\sin\phi_i$ est adressé à l'entrée du sommateur 17. Dans l'exemple représenté, on a $\phi_p=0$ pour le canal pilote et $\phi_s=\pi/2$ pour le canal de service, ce qui simplifie le traitement de ces deux canaux comme représenté.

Dans ces conditions, l'expression du signal radio émis est:

$$[\sum_i SCi \times \cos\phi_i]\cos(wt) - [\sum_i SCi \times \sin\phi_i]\sin(wt)$$

$$= \sum_i SCi \times \cos(wt + \phi_i) \qquad (2)$$

ce qui met en évidence les déphasages $\phi_i$ appliqués entre les différents canaux AMRC dans le signal radio.

On voit aussi que, bien que l'étage de modulation de porteuse 20 soit du type MDP-4 et qu'on ait donc à la fois des composantes en phase et en quadrature, la modulation effective de chaque signal de canal SCi est seulement à deux états, du fait de l'utilisation des séquences d'étalement réelles. On peut également vérifier que le schéma de la figure 3 équivaut à celui de la figure 4 lorsque $\phi_i=0$ ou $\pi/2$ pour chaque canal.

Avec le modulateur de la figure 4, on peut utiliser divers protocoles pour attribuer les phases $\phi_i$ aux différents canaux. De façon générale, il sera intéressant de distribuer les phases de façon relativement uniforme dans l'intervalle $[0, \pi[$. Une façon appropriée de réaliser ceci est d'utiliser une procédure dichotomique: ayant fixé $\phi_p=0$ et $\phi_s=\pi/2$, on peut sélectionner, au fur et à mesure que des canaux de communication i sont ouverts: $\phi_1=\pi/4$, $\phi_2=3\pi/4$, $\phi_3=\pi/8$, $\phi_4=3\pi/8$, $\phi_5=5\pi/8$, $\phi_6=7\pi/8$, $\phi_7=\pi/16$, etc....

Sur la figure 4, la sommation pondérée des signaux de canaux est assurée pour la voie I par les blocs de pondération 63 et le sommateur 16, et pour la voie Q par les blocs de pondération 64 et le sommateur 17. Bien entendu, divers autres modes de sommation pondérée sont envisageables, par exemple en assurant la pondération par un réglage de la tension de référence analogique des convertisseurs 14.

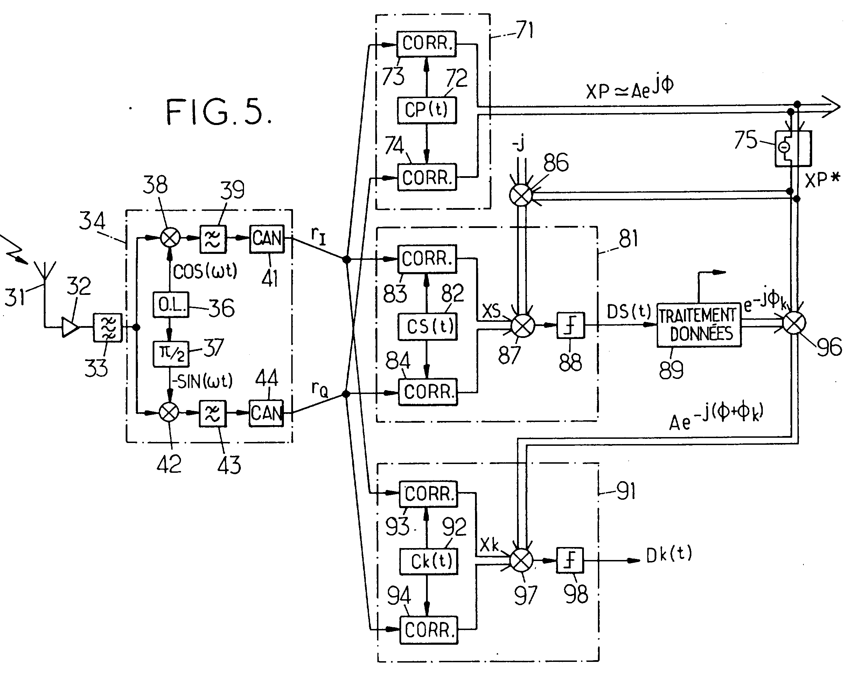

Le déphasage $\phi_i$ ($1 \leq i \leq m$) affecté par la station de base à chaque canal de communication vocale est inclus dans les données DS(t) transmises sur le canal de service. Chaque station mobile est en mesure de recevoir ces données DS(t) car elle connaît a priori la séquence d'étalement CS et le déphasage prédéterminé $\phi_s$ ($=\pi/2$ dans l'exemple décrit) affectés au canal de service. La station mobile peut donc connaître le déphasage $\phi_k$ qui est affecté au canal de communication vocale qui lui est attribué lorsqu'une communication est en cours. Comme la station mobile connaît également la séquence d'étalement correspondante Ck (la séquence d'étalement identifie la station mobile), elle peut recevoir les bits d'information Dk(t) qui lui sont destinés, au moyen d'un démodulateur AMRC tel que celui représenté sur la figure 5.

Le signal radio reçu sur l'antenne 31 est amplifié et filtré puis soumis à l'étage de démodulation de porteuse 34 qui est identique à celui de la figure 2. On obtient ainsi une composante en phase $r_I$ et une composante en quadrature $r_Q$. Si on considère, pour simplifier l'exposé sans affecter sa généralité, qu'il n'y a qu'un trajet de propagation non bruité entre la station de base émettrice et la station mobile réceptrice, on a, avec l'expression (2) du signal radio:

$$r_I = A \times \sum_i SCi \times \cos(\phi_i + \phi) \qquad (3)$$

et

$$r_Q = A \times \sum_i SCi \times \sin(\phi_i + \phi) \qquad (4)$$

où $Ae^{j\phi}$ est une estimation de la réponse du trajet de propagation, A correspondant à l'atténuation et $\phi$ au déphasage de la réponse.

On voit ainsi qu'en calculant un nombre complexe Xk ayant pour partie réelle la corrélation entre la composante en phase $r_I$ et la séquence d'étalement Ck correspondant au canal k, et pour partie imaginaire la corrélation entre la composante en quadrature $r_Q$ et la séquence Ck, on obtient:

$$Xk = \frac{1}{T_b} \times \int_{T_b} (r_I + jr_Q) \times Ck \, dt$$

$$= \frac{A}{T_b} \sum_i \int_{T_b} Di \times e^{j(\phi_i + \phi)} \times Ci \times Ck \, dt$$

$$= A \times Dk \times e^{j(\phi_k + \phi)} + \frac{A}{T_b} \sum_{i \neq k} Di \times e^{j(\phi + \phi_i)} \int_{T_b} Ci \times Ck \, dt \qquad (5)$$

les corrélations étant calculées sur la durée d'un bit. Connaissant $\phi_k$ et après avoir estimé $Ae^{j\phi}$, on peut alors calculer:

$$Xk \times Ae^{-j(\phi_k + \phi)} = A^2 \times Dk + \frac{A^2}{T_b} \sum_{i \neq k} Di \times e^{j(\phi_i - \phi_k)} \int_{T_b} Ci \times Ck \, dt \qquad (6)$$

Cette expression est représentative du bit d'information Dk reçu sur le canal k. Le second terme représente le bruit du second ordre généré par les autres canaux AMRC, l'intercorrélation

$$\frac{1}{T_b} \int_{T_b}$$

étant en moyenne petite devant 1. Grâce au coefficient $e^{j(\phi_i - \phi_k)}$ dû au déphasage relatif appliqué selon l'invention, le bruit généré par le canal $i \neq k$ se répartit entre la partie réelle et la partie imaginaire du signal. La décision sur la valeur du bit Dk étant prise sur l'axe réel, l'influence du bruit généré par le canal i est réduite proportionnellement au cosinus de $\phi_i - \phi_k$. On peut donc réduire, en moyenne de 3dB, la puissance relative du bruit dû aux interféreurs, tout en utilisant des séquences d'étalement réelles.

Si on désire exploiter les trajets multiples entre la station de base et la station mobile, on utilisera un récepteur en râteau pour traiter les composantes de modulation $r_I$ et $r_Q$, chaque bras du récepteur ayant la configuration montrée sur la figure 5 et assurant la réception selon un trajet particulier, et les bits produits par les différents bras étant combinés pour réduire le taux d'erreur. En référence à la figure 5, chaque bras de réception comporte trois modules de traitement 71, 81, 91 pour traiter respectivement le canal pilote, le canal service, et un canal de communication vocale k.

La synchronisation initiale des séquences d'étalement pour un trajet peut par exemple s'effectuer comme décrit dans la demande de brevet français n° 93 07 269. Après cela, les générateurs 72, 82, 92 des modules 71, 81, 91 peuvent fournir les séquences d'étalement CP, CS, Ck de façon synchrone.

Chacun des modules 71, 81, 91 comporte deux corrélateurs 73 et 74, 83 et 84, 93 et 94 qui calculent respectivement, sur la durée d'un bit, la corrélation entre la composante $r_I$ et la séquence d'étalement correspondante CP, CS, Ck, et la corrélation entre la composante $r_Q$ et la même séquence d'étalement. Les signaux de sortie de ces deux corrélateurs 73 et 74, 83 et 84, 93 et 94 constituent respectivement la partie réelle et la partie imaginaire du signal complexe XP, XS, Xk défini précédemment.

Comme on a $\phi_p = 0$ pour le canal pilote, le signal complexe XP produit par le module 71 représente l'estimation de la réponse $Ae^{j\phi}$ du canal de propagation (voir relation (5)). Cette estimation peut être adressée à l'unité de gestion du récepteur en râteau afin qu'il ne soit tenu compte du trajet considéré que si l'estimation du gain d'atténuation A n'est pas trop faible. En 75, le complexe conjugué de XP, $XP^* \simeq Ae^{-j\phi}$, est calculé. Le multiplieur complexe 86 multiplie ce nombre complexe $XP^*$ par $-j = e^{-j\pi/2}$ pour fournir une estimation de $Ae^{-j(\phi + \pi/2)}$ qui tient compte des déphasages $\phi$ et $\phi_s = \pi/2$.

Le module 81 comprend un multiplieur complexe 87 qui multiplie le signal complexe XS par l'estimation fournie par le multiplieur 86. Compte tenu de la relation (6), la partie réelle du signal de sortie du multiplieur 87 représente l'estimation du bit de données DS reçu sur le canal de service. Cette estimation est soumise au comparateur à seuil 88 pour obtenir la valeur du bit DS. Les valeurs successives des bits DS sont adressées à une unité 89 de traitement du canal de service. L'unité 89 extrait des données DS la phase $\phi_k$ affectée au canal de communication k, et adresse à un multiplieur complexe 96 un signal représentant le nombre complexe $e^{-j\phi_k}$.

L'autre entrée du multiplieur 96 reçoit le nombre complexe $XP^*$ délivré par le bloc 75. Le multiplieur 96 fournit donc une estimation de $Ae^{-j(\phi+\phi k)}$ qui tient compte des déphasages $\phi$ et $\phi_k$.

Le module 91 comprend un multiplieur complexe 97 qui multiplie le signal complexe Xk par l'estimation fournie par le multiplieur 96. Compte tenu de la relation (6), la partie réelle du signal de sortie du multiplieur 97 représente l'estimation du bit d'information Dk reçu sur le canal de communication vocale. Cette estimation est soumise au comparateur à seuil 98 pour obtenir la valeur du bit Dk. Les bits d'information reçus Dk peuvent ensuite être décodés pour restituer les signaux vocaux transmis.

Le modulateur et le démodulateur selon l'invention ont une structure beaucoup plus simple que ceux antérieurement connus qui utilisaient des séquences complexes. Ainsi, le modulateur de la figure 3 ou 4 implique un seul multiplieur 61 pour assurer l'étalement du spectre sur chaque canal AMRC au lieu de deux 12, 13 pour le modulateur classique de la figure 1. Et le démodulateur de la figure 5 implique deux corrélateurs 93, 94 par canal AMRC, au lieu de quatre corrélateurs 47 pour le démodulateur classique de la figure 2.

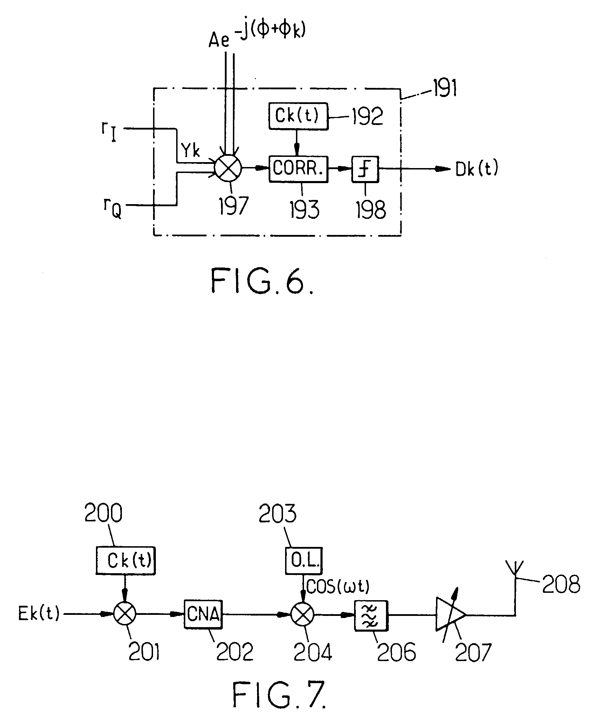

Il est même possible, lorsque les circuits utilisés permettent des opérations de multiplication complexe à la cadence d'échantillonage numérique des composantes $r_I$ et $r_Q$, de n'utiliser qu'un corrélateur pour chaque module de traitement d'un canal AMRC dans le démodulateur. Une telle variante du module de traitement est représentée sur la figure 6. Le module 191 comprend un multiplieur complexe 197 dont une entrée reçoit le nombre complexe Yk ayant pour partie réelle la composante en phase $r_I$ et pour partie imaginaire la composante en quadrature $r_Q$, et dont l'autre entrée reçoit l'estimation de $Ae^{-j(\phi+\phi k)}$. Avec les expressions (3) et (4) des composantes $r_I$ et $r_Q$, la partie réelle du signal de sortie du multiplieur 197 s'écrit:

$$A^2 \times Dk \times Ck + A^2 \sum_{i \neq k} Di \times Ci \times \cos(\phi_i - \phi_k)$$

Un corrélateur 193 calcule alors, sur la durée d'un bit, la corrélation entre cette partie réelle et la séquence d'étalement du canal Ck fournie par le générateur 192, pour délivrer l'estimation du bit d'information Dk reçu sur le canal. Cette estimation est fournie au comparateur à seuil 198 pour obtenir la valeur du bit Dk.

Un module de traitement semblable au module 191 peut être également utilisé pour traiter le canal de service.

On a décrit ci-dessus des modules 71, 81, 91, 191 traitant directement les composantes en phase $r_I$ et en quadrature $r_Q$. Il est également possible de calculer la somme $r_I + r_Q$ et la différence $r_I-r_Q$ en sortie de l'étage de démodulation de porteuse 34, la somme et la différence calculées constituant de nouvelles composantes en quadrature l'une par rapport à l'autre, qui peuvent être traitées de façon identique par les modules 71, 81, 91, 191, les estimations adressées aux multiplieurs 87, 97, 197 correspondant alors aux quantités $A\sqrt{2} \times e^{-j(\phi+\phi i+\pi/4)}$. Sans sortir du cadre de l'invention, ces estimations peuvent d'ailleurs être obtenues de façon différente, pourvu qu'elles prennent bien en compte le déphasage $\phi$ introduit par un trajet de propagation et le déphasage $\phi_i$ affecté au canal AMRC traité.

En ce qui concerne les liaisons montantes d'une station mobile vers une station de base, on peut également utiliser des séquences d'étalement ayant une seule composante réelle. Les différents canaux AMRC sont établis chacun par une station mobile utilisant sa séquence d'étalement Ck. La station de base reçoit les signaux transmis sur les différents canaux AMRC avec des déphasages relatifs qui, en moyenne, sont uniformément répartis dans l'intervalle [0, 2π[, en raison des trajets de propagation différents suivis par les signaux radio émis par différentes stations mobiles. Le bruit dû aux interféreurs peut donc être réduit grâce à ces déphasages comme dans le cas des liaisons descendantes.

Dans la partie émission de la station mobile, il suffit que l'étage de modulation de porteuse assure simplement une modulation de phase à deux états (MDP-2) comme l'illustre la figure 7.

Dans le modulateur de la figure 7, les bits codés Ek à émettre par la station mobile sont modulés en 201 par la séquence d'étalement Ck délivrée par le générateur 200. Après conversion numérique-analogique 202, le signal de canal ainsi formé module, dans le mélangeur 204, une onde porteuse fournie par l'oscillateur local 203. Le signal radio passe ensuite par le filtre passe-bande 206, avant d'être amplifié en 207 puis émis sur l'antenne 208. Comme il est usuel dans les systèmes AMRC, l'amplificateur 207 est à gain réglable, pour permettre de contrôler la puissance du signal émis par la station mobile (voir les documents US-A-5 056 109 et WO 92/21196).

**Revendications**

1. Procédé de transmission pour des communications radiotéléphoniques à accès multiple à répartition par codes (AMRC), dans lequel une station de base établit des canaux AMRC définis chacun par une séquence d'étalement respective (CS,C1, ..., Cm) modulant des bits d'information à transmettre (DS, D1,..., Dm) pour former un signal de canal respectif (SCS, SC1,..., SCm), et les différents signaux de canaux sont combinés puis modulés sur une fréquence porteuse, de manière à produire un signal radio à modulation de phase émis vers des stations mobiles, caractérisé en ce que chaque séquence d'étalement (CP, CS, C1,..., Cm) ne comporte qu'une composante réelle, et en ce que, pour produire le signal radio, on applique un déphasage relatif entre différents signaux de canaux (SCP, SCS, SC1, ...,SCm).

2. Procédé selon la revendication 1, caractérisé en ce que les signaux de canaux sont répartis en n groupes, n désignant un nombre entier, et en ce que les signaux de canaux d'un même groupe sont sommés pour former une composante de modulation (I, Q) qui module une onde radio respective à la fréquence porteuse, les ondes radio relatives aux différents groupes présentant entre elles des déphasages multiples de $\pi/2^{n-1}$.

3. Procédé selon la revendication 1, caractérisé en ce que on affecte un déphasage propre ($\phi_i$) à chaque signal de canal (SCi).

4. Procédé selon la revendication 3, caractérisé en ce que les déphasages affectés aux signaux de canaux sont sélectionnés dans l'intervalle [0, $\pi$[ selon une procédure dichotomique.

5. Procédé selon l'une quelconque des revendications 1 à 4, caractérisé en ce que l'un des canaux AMRC est un canal pilote dont le signal de canal (SCP) est constitué par une séquence pilote (CP), et en ce qu'un autre des canaux AMRC est un canal de service sur lequel sont transmis des bits d'information (DS) contenant des données relatives aux déphasages ($\phi_k$) appliqués entre le signal du canal pilote (SCP) et d'autres signaux de canaux (SCk).

6. Procédé selon la revendication 5, caractérisé en ce qu'un déphasage fixe prédéterminé est appliqué entre le signal du canal pilote (SCP) et le signal du canal de service (SCS).

7. Procédé selon l'une quelconque des revendications 1 à 6, caractérisé en ce que le signal radio montant transmis d'une station mobile vers une station de base est un signal AMRC dans lequel des bits d'information (Ek) sont modulés par une séquence d'étalement (Ck) ayant une seule composante réelle, puis modulés sur une fréquence porteuse par modulation de phase.

8. Procédé selon l'une quelconque des revendications 1 à 6, caractérisé en ce que la réception par une station mobile des bits d'information (DS, Dk) transmis sur un canal AMRC comporte une étape de démodulation de porteuse fournissant une composante en phase ($r_I$) et une composante en quadrature ($r_Q$) à partir du signal radio, le calcul d'une corrélation entre la composante en phase ($r_I$) et la séquence d'étalement (CS, Ck) correspondant au canal AMRC, et le calcul d'une corrélation entre la composante en quadrature ($r_Q$) et la séquence d'étalement (CS, Ck) correspondant au canal AMRC, ces deux corrélations constituant respectivement la partie réelle et la partie imaginaire d'un nombre complexe (XS, Xk) qu'on multiplie par une estimation prenant en compte le déphasage ($\phi$) introduit par un trajet de propagation et le déphasage ($\phi_i$) affecté au canal AMRC, pour obtenir un signal représentatif des bits d'information transmis (DS, Dk).

9. Procédé selon l'une quelconque des revendications 1 à 6, caractérisé en ce que la réception par une station mobile des bits d'information (Dk) transmis sur un canal AMRC comporte une étape de démodulation de porteuse fournissant, à partir du signal radio, une composante en phase ($r_I$) et une composante en quadrature ($r_Q$) constituant respectivement la partie réelle et la partie imaginaire d'un nombre complexe (Yk) qu'on multiplie par une estimation prenant en compte le déphasage ($\phi$) introduit par un trajet de propagation et le déphasage ($\phi_k$) affecté au canal AMRC, la partie réelle du résultat de cette multiplication étant soumise à une corrélation avec la séquence d'étalement (Ck) correspondant au canal AMRC, pour obtenir un signal représentatif des bits d'information transmis (Dk).

10. Procédé selon la revendication 8 ou 9, caractérisé en ce que l'un des canaux AMRC est un canal pilote dont le signal de canal (SCP) est constitué par une séquence pilote (CP), et en ce que le déphasage ($\phi$) introduit par le trajet de propagation est estimé à partir d'un nombre complexe (XP) ayant pour partie réelle une corrélation entre la séquence pilote (CP) et la composante en phase ($r_I$), et pour partie imaginaire une corrélation entre la séquence pilote (CP) et la composante en quadrature ($r_Q$).

11. Procédé selon la revendication 10, caractérisé en ce qu'un autre des canaux AMRC est un canal de service sur lequel sont transmis des bits d'information (DS) contenant des données relatives aux déphasages ($\phi_k$) appliqués entre le signal du canal pilote (SCP) et d'autres signaux de canaux (SCk), en ce qu'un déphasage fixe prédéterminé est appliqué entre le signal du canal pilote (SCP) et le signal du canal de service (SCS), en ce que, au niveau de la station mobile, on effectue la réception des bits d'information (DS) transmis sur le canal de service en utilisant le déphasage fixe prédéterminé affecté au canal de service, et en ce qu'on effectue la réception des bits d'information (Dk) transmis sur un autre canal AMRC en utilisant comme déphasage ($\phi_k$) un déphasage déterminé à partir des données contenues dans les bits d'information (DS) reçus sur le canal de service.

12. Modulateur AMRC pour produire un signal radio descendant d'une station de base vers des stations mobiles d'un réseau radiotéléphonique, comprenant des moyens (60, 61) de multiplexage et d'étalement de spectre pour définir des canaux AMRC dans lesquels des signaux de canaux respectifs (SCS, SC1, ..., SCm) sont formés en modulant des bits d'information à transmettre (DS, D1,..., Dm) par une séquence d'étalement respective (CS, C1, ..., Cm), des moyens (63, 64, 16, 17) pour combiner les différents signaux de canaux, et des moyens de modulation de porteuse (20) pour produire un signal radio à modulation de phase à partir des combinaisons des différents signaux de canaux, caractérisé en ce que chaque séquence d'étalement ne comporte qu'une composante réelle, et en ce que les moyens de combinaison sont agencés pour que, dans le signal radio, un déphasage relatif soit appliqué entre différents signaux de canaux.

13. Modulateur AMRC selon la revendication 12, caractérisé en ce que les signaux de canaux sont répartis en deux groupes, et en ce que les moyens de combinaison comprennent deux sommateurs (16, 17) recevant respectivement les signaux de canaux des deux groupes et délivrant respectivement une composante de modulation en phase (I) et une composante de modulation en quadrature (Q), les composantes de modulation en phase et en quadrature modulant respectivement deux ondes radio déphasées entre elles de $\pi/2$.

14. Modulateur AMRC selon la revendication 12, caractérisé en ce que les moyens de combinaison comprennent des premiers moyens de sommation pondérée (63, 16) faisant la somme des signaux de canaux pondérés par $\cos\phi_i$, où $\phi_i$ désigne le déphasage affecté à chaque signal de canal, et délivrant une composante de modulation en phase (I), et des seconds moyens de sommation pondérée (64, 17) faisant la somme des signaux de canaux pondérés par $\sin\phi_i$ et délivrant une composante de modulation en quadrature (Q), les composantes de modulation en phase et en quadrature modulant respectivement deux ondes radio déphasées entre elles de $\pi/2$.

15. Démodulateur AMRC, pour recevoir au niveau d'une station mobile d'un réseau radiotéléphonique des bits d'information (DS, Dk) transmis sur au moins un canal AMRC par une station de base du réseau comportant un modulateur AMRC selon l'une quelconque des revendications 12 à 14, caractérisé en ce qu'il comprend des moyens de démodulation de porteuse (34) délivrant une composante en phase ($r_I$) et une composante en quadrature ($r_Q$) à partir du signal radio émis par la station de base, un premier corrélateur (83, 93) calculant une corrélation entre la composante en phase ($r_I$) et la séquence d'étalement (CS, Ck) correspondant au canal AMRC, un second corrélateur (84, 94) calculant une corrélation entre la composante en quadrature ($r_Q$) et la séquence d'étalement (CS, Ck) correspondant au canal AMRC, un multiplieur complexe (87, 97) dont une entrée reçoit le nombre complexe (XS, Xk) ayant respectivement pour parties réelle et imaginaire les sorties des premier et second corrélateurs, et dont l'autre entrée reçoit une estimation prenant en compte le déphasage ($\phi$) introduit par un trajet de propagation et le déphasage ($\phi_s, \phi_k$) affecté au canal AMRC, et des moyens de comparaison (88, 98) recevant la partie réelle de la sortie du multiplieur complexe (87, 97) et restituant les bits d'information transmis (DS, Dk).

16. Démodulateur AMRC, pour recevoir au niveau d'une station mobile d'un réseau radiotéléphonique des bits d'information (Dk) transmis sur au moins un canal AMRC par une station de base du réseau comportant un modulateur AMRC selon l'une quelconque des revendications 12 à 14, caractérisé en ce qu'il comprend des moyens de démodulation de porteuse (34) délivrant une composante en phase ($r_I$) et une composante en quadrature ($r_Q$) à partir du signal radio émis par la station de base, un multiplieur complexe (197) dont une entrée reçoit le nombre complexe (Yk) ayant respectivement pour parties réelle et imaginaire les composantes en phase ($r_I$) et en quadrature ($r_Q$), et dont l'autre entrée reçoit une estimation prenant en compte le déphasage ($\phi$) introduit par un trajet de propagation et le déphasage ($\phi_k$) affecté au canal AMRC, un corrélateur (193) calculant une corrélation entre la partie réelle de la sortie du multiplieur complexe (197) et la séquence d'étalement (Ck) correspondant au canal AMRC, et des moyens de comparaison (198) recevant la sortie du corrélateur (193) et restituant les bits d'information transmis (Dk).

**Patentansprüche**

1. Verfahren zur Übertragung mittels radiotelefonischer Kommunikation mit Vielfachzugang mit Verteilung durch Codes (CDMA), bei welchem eine Basisstation die CDMA Kanäle einrichtet, welche jeweils durch eine jeweilige Ausdehnungssequenz (CS, C1, ..., Cm) definiert werden, welche die zu übertragenden Informationsbits (DS, D1, ..., Dm) zur Bildung eines jeweiligen Kanalsignals (SCS, SC1, ..., SCm) modulieren, und die verschiedenen Kanalsignale kombiniert werden und dann auf einer Trägerfrequenz moduliert werden, derart, um ein Radiosignal mit Phasenmodulation zu produzieren, das zu den beweglichen Stationen emittiert wird, dadurch gekennzeichnet, daß jede Ausdehnungssequenz (CP, CS, C1, ..., Cm) nur eine reelle Komponente aufweist und daß man zur Bildung des Radiosignals eine relative Phasenverschiebung zwischen den verschiedenen Kanalsignalen (SCP, SCS, SC1, ..., SCm) anwendet.

2. Verfahren nach Anspruch 1,
dadurch gekennzeichnet,
daß die Signale der Kanäle in n-Gruppen aufgeteilt werden, wobei n eine ganze Zahl bezeichnet, und daß die Signale der Kanäle einer gleichen Gruppe summiert werden, um eine Modulationskomponente (I, Q) zu bilden, welche jeweils eine Radiowelle mit der Trägerfrequenz moduliert, wobei die auf die verschiedenen Gruppen bezogenen Radiowellen jeweils zwischen sich vielfältige Phasenverschiebungen von $n/2^{\pi-1}$ aufweisen.

3. Verfahren nach Anspruch 1,
dadurch gekennzeichnet,
daß man eine geeignete Phasenverschiebung ($\phi_i$) auf jedes Kanalsignal (SCi) anwendet.

4. Verfahren nach Anspruch 3,
dadurch gekennzeichnet,
daß die auf die Signale der Kanäle angewendeten Phasenverschiebungen aus dem Intervall $[0, \pi]$ gemäß einem dichotomischen Verfahren ausgewählt werden.

5. Verfahren nach irgendeinem der Ansprüche 1 bis 4,
dadurch gekennzeichnet,
daß einer der CDMA-Kanäle ein Pilotkanal ist, dessen Kanalsignal (SCP) durch eine Pilotsequenz (CP) gebildet wird, und daß ein anderer der CDMA-Kanäle ein Servicekanal ist, auf welchem Informationsbits (DS) übertragen werden, welche auf die Phasenverschiebungen ($\phi_k$), die zwischen dem Pilotkanalsignal (SCP) und den anderen Kanalsignalen (SCk) angewendet werden, bezogenen Daten enthalten.

6. Verfahren nach Anspruch 5,
dadurch gekennzeichnet,
daß eine vorbestimmte feste Phasenverschiebung zwischen dem Pilotkanalsignal (SCP) und dem Servicekanalsignal (SCS) angewendet wird.

7. Verfahren nach irgendeinem der Ansprüche 1 bis 6,
dadurch gekennzeichnet,
daß das ansteigende Radiosignal, das von einer beweglichen Station zu einer Basisstation übertragen wird, ein CDMA-Signal ist, in welchem Informationsbits (Ek) durch eine Ausdehnungssequenz moduliert werden, die eine einzige reelle Komponente aufweist, und dann auf eine Trägerfrequenz durch Phasenmodulation moduliert werden.

8. Verfahren nach irgendeinem der Ansprüche 1 bis 6,
dadurch gekennzeichnet,
daß der Empfang von Informationsbits (DS, Dk), die auf einem CDMA-Kanal übertragen worden sind, durch eine bewegliche Station den Schritt der Demodulation des Trägers aufweist, welcher eine Phasenkomponente ($r_I$) und eine Quadratkomponente ($r_Q$), ausgehend vom Radiosignal, liefert, wobei die Berechnung einer Korrelation zwischen der Phasenkomponente ($r_I$) und der Ausdehnungssequenz (CS, Ck) dem CDMA-Kanal entspricht und wobei die Berechnung einer Korrelation zwischen der Quadratkomponente ($r_Q$) und der Ausdehnungssequenz (CS, Ck) dem CDMA-Kanal entspricht, wobei die beiden Korrelationen jeweils den reellen und den imaginären Teil einer komplexen Zahl (XS, Xk) bilden, welche man mit einer Schätzung multipliziert, welche der Phasenverschiebung ($\phi$), die durch die Ausdehnungsbahn eingeführt wird, und der Phasenverschiebung ($\phi_i$) Rechnung trägt, die auf den CDMA-Kanal angewendet wird, um ein für die übertragenen Informationsbits (DS, Dk) repräsentatives Signal zu erhalten.

9. Verfahren nach irgendeinem der Ansprüche 1 bis 6,
dadurch gekennzeichnet,
daß der Empfang von auf einem CDMA-Kanal übertragenen Informationsbits (Dk) durch eine bewegliche Station den Schritt der Demodulation des Trägers aufweist, welcher ausgehend vom Radiosignal eine Komponente in Phase ($r_I$) und eine Quadratkomponente ($r_Q$) liefert, die jeweils den reellen Teil und den imaginären Teil einer komplexen Zahl (Yk) bilden, welche man mit einem Schätzwert multipliziert, der der Phasenverschiebung ($\phi$), die durch die Ausdehnungsbahn eingeführt wird, und der Phasenverschiebung ($\phi_k$) Rechnung trägt, die auf den CDMA-Kanal angewendet wird, wobei der reelle Teil des Resultats dieser Multiplikation einer Korrelation mit der Ausdehnungssequenz (Ck) entsprechend dem CDMA-Kanal unterzogen wird, um ein für die übertragenen Informationsbits (Dk) repräsentatives Signal zu erhalten.

10. Verfahren nach Anspruch 8 oder 9,
dadurch gekennzeichnet,
daß einer der CDMA-Kanäle ein Pilotkanal ist, dessen Kanalsignal (SCP) durch eine Pilotsequenz (CP) gebildet wird, und daß die Phasenverschiebung ($\phi$), die durch die Ausdehnungsbahn eingeführt wird, ausgehend von einer komplexen Zahl (XP) geschätzt wird, welche als reellen Teil eine Korrelation zwischen der Pilotsequenz (CP) und der Komponente in Phase ($r_I$) und als imaginären Teil eine Korrelation zwischen der Pilotsequenz (CP) und der Quadratkomponente ($r_Q$) hat.

11. Verfahren nach Anspruch 10,
dadurch gekennzeichnet,
daß ein anderer der CDMA-Kanäle ein Servicekanal ist, auf welchem Informationsbits (DS) übertragen werden, welche auf die Phasenverschiebungen ($\phi_k$) bezogene Daten enthalten, die zwischen dem Pilotkanalsignal (SCP) und den anderen Signalen der Kanäle (SCk) angewendet wird, daß eine feste vorbestimmte Phasenverschiebung zwischen dem Pilotkanalsignal (SCP) und dem Servicekanalsignal (SCS) angewendet wird, daß man auf dem Niveau der mobilen Station den Empfang der Informationsbits (DS), die auf dem Servicekanal übertragen werden, bewirkt, indem die feste vorbestimmte Phasenverschiebung auf den Servicekanal angewendet wird, und daß man den Empfang der Informationsbits (Dk), die auf einem anderen CDMA-Kanal übertragen werden, bewirkt, indem man als Phasenverschiebung ($\phi_k$) eine Phasenverschiebung verwendet, die ausgehend von den Daten, die in den auf dem Servicekanal empfangenen Informationsbits (DS) enthalten sind, bestimmt wird.

12. CDMA-Modulator zur Erzeugung eines von einer Basisstation zu mobilen Stationen eines Radiotelefonnetzes hinausgehenden Radiosignals mit Mitteln (60,61) zur Multiplizierung und Ausdehnung des Spektrums zur Definierung der CDMA-Kanäle, in denen die jeweiligen Kanalsignale (SCS, SC1, ..., SCm) gebildet werden durch Modulation der zu übertragenen Informationsbits (DS, D1, ..., Dm) durch eine jeweilige Ausdehnungssequenz (CS, C1, ..., Cm), mit Mitteln (63,64,16,17) zum Kombinieren der verschiedenen Kanalsignale und mit Trägermodulationsmitteln (20) zum Bilden eines Radiosignals mit Phasenmodulation, ausgehend von den Kombinationen der verschiedenen Kanalsignale,
dadurch gekennzeichnet,
daß jede Ausdehnungssequenz nur eine reelle Komponente aufweist und daß die Mittel zum Kombinieren betätigt werden, um im Radiosignal eine relative Phasenverschiebung zwischen verschiedenen Kanalsignalen anzuwenden.

13. CDMA-Modulator nach Anspruch 12,
dadurch gekennzeichnet,
daß die Kanalsignale in zwei Gruppen aufgeteilt werden und daß die Mittel zum Kombinieren zwei Summierer (16,17) aufweisen, die jeweils die Kanalsignale der beiden Gruppen empfangen und jeweils eine Komponente der Phasenmodulation (I) und eine Komponente der Quadratmodulation (Q) liefern, wobei die Komponenten der Phasenmodulation und der Quadratmodulation jeweils Radiowellen modulieren, die zwischen sich um $\pi/2$ phasenverschoben sind.

14. CDMA-Modulator nach Anspruch 12,
dadurch gekennzeichnet,
daß die Mittel zum Kombinieren erste Mittel zur ausgeglichenen Summation (61,16), welche die Summe der Kanalsignale ausgeglichen durch $\cos\phi_I$ bilden, wobei $\phi_I$ die auf jedes Kanalsignal angewendete Phasenverschiebung bezeichnet, und eine Phasenmodulationskomponente (I) liefern, und zweite Mittel zur ausgeglichenen Summation (64,17) aufweisen, die die Summe der Kanalsignale ausgeglichen durch $\sin\phi_i$ bilden und eine Quadratmodulationskomponente (Q) liefern, wobei die Phasenmodulations- und Quadratmodulationskomponenten jeweils zwei Radiowellen modulieren, die zwischen sich um $\pi/2$ phasenverschoben sind.

15. CDMA-Demodulator zum Empfangen von Informationsbits (DS, Dk), die auf wenigstens einem CDMA-Kanal von

**EP 0 639 009 B1**

einer Basisstation des Netzes geliefert werden, im Niveau einer mobilen Station eines Radiotelefonnetzes mit einem AMRC-Modulator nach irgendeinem der Ansprüche 12 bis 14,
dadurch gekennzeichnet,
daß dieser Mittel zur Demodulation des Trägers (34), welche eine Phasenkomponente ($r_I$) und eine Quadratkomponente ($r_Q$), ausgehend von einem aus der Basisstation emittierten Radiosignal, liefern, einen ersten Korrelator (83,93), der eine Korrelation zwischen der Phasenkomponente ($r_I$) und der Ausdehnungssequenz (CS, Ck) entsprechend dem CDMA-Kanal berechnet, einen zweiten Korrelator (84,94), der eine Korrelation zwischen der Quadratkomponente ($r_Q$) und der Ausdehnungssequenz (CS, Ck) entsprechend dem CDMA-Kanal berechnet, einen komplexen Multiplizierer (87,97), dessen einer Eingang die komplexe Zahl (XS, Xk) empfängt, welche jeweils als reelle und imaginäre Teile die Ausgänge des ersten und zweiten Korrelators aufweist, und dessen anderer Eingang einen Schätzwert empfängt, der der Phasenverschiebung ($\phi$), die durch die Ausdehnungsbahn eingeführt wird, und der Phasenverschiebung ($\phi_s, \phi_k$), die auf den CDMA-Kanal angewendet wird, Rechnung trägt und Vergleichsmittel (88,98) aufweist, die den reellen Teil am Ausgang des komplexen Multiplizierers (87,97) empfangen und die übertragenen Informationsbits (DS, Dk) wiederherstellen.

16. CDMA-Demodulator zum Empfangen von Informationsbits (Dk), die auf wenigstens einem CDMA-Kanal von einer Basisstation des Netzes empfangen werden, im Niveau einer mobilen Station des Radiotelefonnetzes, mit einem AMRC-Modulator nach irgendeinem der Ansprüche 12 bis 14,
dadurch gekennzeichnet,
daß dieser Mittel zur Demodulation des Trägers (34), welche eine Phasenkomponente ($r_I$) und eine Quadratkomponente ($r_Q$), ausgehend von dem aus der Basisstation emittierten Radiosignal, liefern, einen komplexen Multiplizierer (197), dessen einer Eingang die komplexe Zahl (Yk) empfängt, welche jeweils als reelle und imaginäre Teile die Phasenkomponente ($r_I$) und die Quadratkomponente ($r_Q$) aufweist, und dessen anderer Eingang einen Schätzwert empfängt, welcher der Phasenverschiebung ($\phi$), die durch die Ausdehnungsbahn eingeführt wird, und der Phasenverschiebung ($\phi_k$), die auf den CDMA-Kanal angewendet wird, Rechnung trägt, einen Korrelator (193), der die Korrelation zwischen dem reellen Teil des Ausgangs des komplexen Multiplizierers (197) und der Ausdehnungssequenz (Ck) entsprechend dem CDMA-Kanal berechnet, und Vergleichsmittel (198) aufweist, welche den Ausgang des Korrelators (193) empfangen und die übertragenen Informationsbits (Dk) wiederherstellen.

## Claims

1. A transmission method for code-division multiple access (CDMA) radiotelephone communications, wherein a base station establishes a plurality of CDMA channels each defined by a respective spreading sequence (CS,C1,..., Cm) modulating information bits to be transmitted (DS,D1,...,Dm) to form a respective channel signal (SCS,SC1,..., SCm), and the different channel signals are combined and then modulated on a carrier frequency, so as to produce a phase shift keyed radio signal transmitted to mobile stations, characterized in that each spreading sequence (CP,CS,C1,...,Cm) has only one real component, and in that, for producing the radio signal, a relative phase shift is applied between different channel signals (SCP,SCS,SC1,...,SCm).

2. A method according to claim 1, characterized in that the channel signals are distributed in n groups, n designating an integer, and in that the channel signals of a same group are summed to form a modulation component (I,Q) which modulates a respective radio wave at the carrier frequency, the radio waves relating to the different groups having phase shifts multiple of $\pi/2^{n-1}$ therebetween.

3. A method according to claim 1, characterized in that a particular phase shift ($\phi_i$) is assigned to each channel signal (SCi).

4. A method according to claim 3, characterized in that the phase shifts assigned to the channel signals are selected in the interval $[0,\pi[$ according a dichotomic procedure.

5. A method according to any one of claims 1 to 4, characterized in that one of the CDMA channels is a pilot channel whose channel signal (SCP) is constituted by a pilot sequence (CP), and in that another one of the CDMA channels is a service channel over which information bits (DS) are transmitted, containing data relating to the phase shifts ($\phi_k$) applied between the pilot channel signal (SCP) and other channel signals (SCk).

6. A method according to claim 5, characterized in that a fixed predetermined phase shift is applied between the pilot channel signal (SCP) and the service channel signal (SCS).

7. A method according to any one of claims 1 to 6, characterized in that the uplink radio signal transmitted from a mobile station to a base station is a CDMA signal in which information bits (Ek) are modulated by a spreading sequence (Ck) having only one real component, and then modulated on a carrier frequency by phase shift keying.

8. A method according to any one of claims 1 to 6, characterized in that the reception by a mobile station of information bits (DS,Dk) transmitted over a CDMA channel includes a carrier demodulation step which provides an in-phase component ($r_I$) and a quadrature component ($r_Q$) from the radio signal, the computation of a correlation between the in-phase component ($r_I$) and the spreading sequence (CS, Ck) corresponding to said CDMA channel, and the computation of a correlation between the quadrature component ($r_Q$) and the spreading sequence (CS,Ck) corresponding to said CDMA channel, said two correlations constituting, respectively, the real part and the imaginary part of a complex number (XS,Xk) which is multiplied by an estimation taking into account the phase shift ($\phi$) introduced by a propagation path and the phase shift ($\phi_i$) assigned to said CDMA channel, so as to obtain a signal representative of the transmitted information bits (DS,Dk).

9. A method according to any one of claims 1 to 6, characterized in that the reception by a mobile station of information bits (Dk) transmitted over a CDMA channel includes a carrier demodulation step providing, from the radio signal, an in-phase component ($r_I$) and a quadrature component ($r_Q$) constituting, respectively, the real part and the imaginary part of a complex number (Yk) which is multiplied by an estimation taking into account the phase shift ($\phi$) introduced by a propagation path and the phase shift ($\phi_k$) assigned to said CDMA channel, the real part of the result of said multiplication being subjected to a correlation with the spreading sequence (Ck) corresponding to said CDMA channel, so as to obtain a signal representative of the transmitted information bits (Dk).

10. A method according to claim 8 or 9, characterized in that one of the CDMA channels is a pilot channel whose channel signal (SCP) is constituted by a pilot sequence (CP), and in that the phase shift ($\phi$) introduced by the propagation path is estimated from a complex number (XP) having, as a real part, a correlation between the pilot sequence (CP) and the in-phase component ($r_I$), and, as an imaginary part, a correlation between the pilot sequence (CP) and the quadrature component ($r_Q$).

11. A method according to claim 10, characterized in that another one of the CDMA channels is a service channel over which information bits (DS) are transmitted, containing data relating to the phase shifts ($\phi_k$) applied between the pilot channel signal (SCP) and other channel signals (SCk), in that a fixed predetermined phase shift is applied between the pilot channel signal (SCP) and the service channel signal (SCS), in that, at the mobile station, reception of the information bits (DS) transmitted over the service channel is carried out by using the fixed predetermined phase shift assigned to the service channel, and in that the reception of the information bits (Dk) transmitted over another CDMA channel is carried out by using a phase shift ($\phi_k$) corresponding to a phase shift determined from data contained in the information bits (DS) received over the service channel.

12. A CDMA modulator for producing a downlink radio signal from a base station to mobile stations of a radiotelephone network, comprising multiplexing and spectrum spreading means (60,61) for defining a plurality of CDMA channels in which respective channel signals (SCS,SC1,...,SCm) are formed by modulating information bits to be transmitted (DS,D1,...,Dm) with a respective spreading sequence (CS,C1,...,Cm), means (63,64,16,17) for combining the different channel signals, and carrier modulation means (20) for producing a phase shift keyed radio signal from the combinations of the different channel signals, characterized in that each spreading sequence has only one real component, and in that the combination means are arranged to apply a relative phase shift between different channel signals in the radio signal.

13. A CDMA modulator according to claim 12, characterised in that the channel signals are distributed in two groups, and in that the combination means comprise two adders (16,17) which respectively receive the channel signals of the two groups and respectively output an in-phase modulation component (I) and a quadrature modulation component (Q), the in-phase and quadrature modulation components respectively modulating two radio waves having a phase shift of $\pi/2$ therebetween.

14. A CDMA modulator according to claim 12, characterised in that the combination means comprise first weighted summation means (63,16) which add channel signals weighted by $\cos\phi_i$, where $\phi_i$ designates the phase shift assigned to each channel signal, and output an in-phase modulation component (I), and second weighted summation means (64,17) which add the channel signals weighted by $\sin\phi_i$ and output a quadrature modulation component (Q), the in-phase and quadrature modulation components modulating, respectively, two radio waves having a phase shift of $\pi/2$ therebetween.

15. A CDMA demodulator, for receiving, at a mobile station of a radiotelephone network, information bits (DS,Dk) transmitted over at least one CDMA channel by a base station of said network, said base station including a CDMA modulator according to any one of claims 12 to 14, characterized in that it comprises carrier demodulation means (34) producing an in-phase component ($r_I$) and a quadrature component ($r_Q$) from the radio signal transmitted by the base station, a first correlator (83,93) calculating a correlation between the in-phase component ($r_I$) and the spreading sequence (CS,Ck) corresponding to said CDMA channel, a second correlator (84,94) calculating a correlation between the quadrature component ($r_Q$) and the spreading sequence (CS,Ck) corresponding to said CDMA channel, a complex multiplier (87,97) having an input which receives the complex number (XS,Xk) having respectively, as real and imaginary parts, the outputs of said first and second correlators, and another input which receives an estimation taking into account the phase shift ($\phi$) introduced by a propagation path and the phase shift ($\phi_s, \phi_k$) assigned to said CDMA channel, and comparison means (88,98) receiving the real part of the output of the complex multiplier (87,97) and restoring the transmitted information bits (DS,Dk).

16. A CDMA demodulator, for receiving, at a mobile station of a radiotelephone network, information bits (Dk) transmitted over at least one CDMA channel by a base station of said network, said base station including a CDMA modulator according to any one of claims 12 to 14, characterized in that it comprises carrier demodulation means (34) producing an in-phase component ($r_I$) and a quadrature component ($r_Q$) from the radio signal transmitted by the base station, a complex multiplier (197) having an input which receives the complex number (Yk) having respectively, as real and imaginary parts, the in-phase ($r_I$) and quadrature ($r_Q$) components, and another input which receives an estimation taking into account the phase shift ($\phi$) introduced by a propagation path and the phase shift ($\phi_k$) assigned to said CDMA channel, a correlator (193) calculating a correlation between the real part of the output of the complex multiplier (197) and the spreading sequence (Ck) corresponding to said CDMA channel, and comparison means (198) receiving the output of the correlator (193) and restoring the transmitted information bits (Dk).

# FIG.1.

FIG. 2.

Dk(t)

Ae$^{j\phi}$

Ae$^{-j\phi}$

51

46

54

53

52

47 48 49

CP$_Q$(t) CORR. 47

CP$_I$(t) 47 CORR.

CP$_I$(t) 47

CORR. CP$_Q$(t)

Ck$_Q$(t) CORR. 47

Ck$_I$(t) 47 CORR.

47 CORR.

Ck$_I$(t) 47 CORR.

Ck$_I$(t) CORR. 47

Ck$_Q$(t)

r$_I$

r$_Q$

CAN 41

39 %

38 COS(ωt)

OL. 36

π/2 37

−SIN(ωt)

CAN 44

43 %

42

34

32

33 %%%

31

17

EP 0 639 009 B1

FIG.3.

FIG.4.

18

FIG.5.

$$Ae^{-j(\phi+\phi k)}$$

FIG.6.

FIG.7.